Europäisches Patentamt

European Patent Office

Office européen des brevets

(11) Publication number: **0 177 162**
**B1**

# (12) EUROPEAN PATENT SPECIFICATION

(45) Date of publication of patent specification: **17.10.90**

(51) Int. Cl.⁵: **G 11 B 15/61**

(21) Application number: **85306035.8**

(22) Date of filing: **23.08.85**

(54) **Tape guide mechanism for magnetic recording/reproducing apparatus.**

(30) Priority: **27.08.84 JP 177843/84**

(43) Date of publication of application:
**09.04.86 Bulletin 86/15**

(45) Publication of the grant of the patent:
**17.10.90 Bulletin 90/42**

(84) Designated Contracting States:
**DE FR GB NL**

(56) References cited:
**EP-A-0 083 932**
**DE-A-3 025 465**
**DE-A-3 338 710**
**GB-A-2 149 958**

(73) Proprietor: **SONY CORPORATION**
**7-35 Kitashinagawa 6-Chome Shinagawa-ku**
**Tokyo 141 (JP)**

(72) Inventor: **Nonoyama, Hideki c/o Sony Corp.**
**Patents Division 6-7-35 Kitashinagawa**
**Shinagawa-ku Tokyo 141 (JP)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to a tape guide mechanism for a magnetic recording/reproducing apparatus.

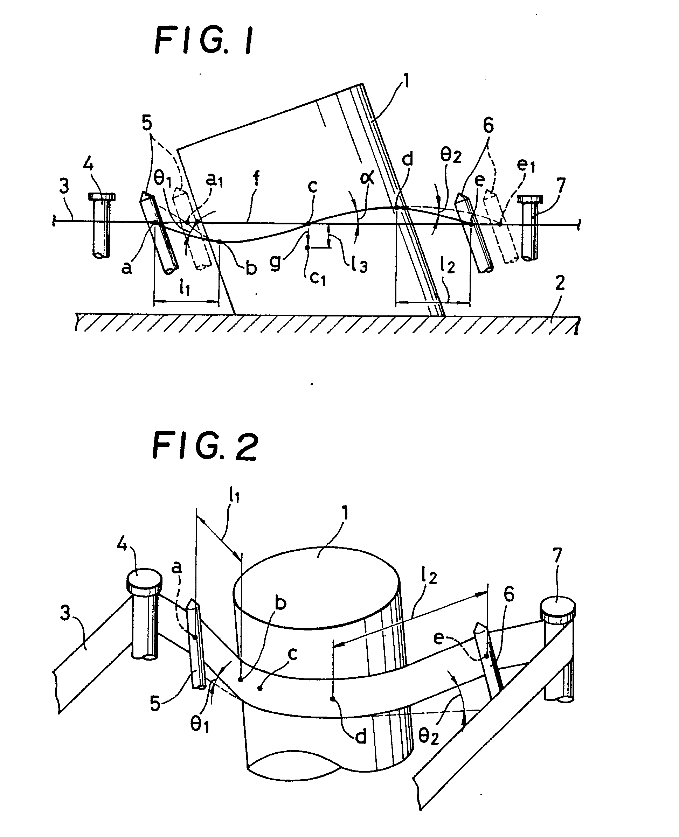

Figure 1 of the accompanying drawings schematically shows a tape guide mechanism for a tape guide drum 1 incorporating a rotary head in magnetic recording/reproducing apparatus of a helical scan type.

The drum 1 is inclined at an angle with respect to a reference surface 2. A magnetic tape 3 passes from a guide roller 4, through a guide point $a$ of an inclined guide pin 5 and is wrapped around the circumferential surface of the drum 1 so as to oppose a rotary head (not shown). The tape is wrapped through a wrap angle of about 90° from an entrance point $b$ to an exit point $d$ through a central point $c$. The magnetic tape 3 is then passed to a guide roller 7 through a guide point $e$ of an inclined guide pin 6. In Figure 1, the respective points $a, b, c, d,$ and $e$ are illustrated as points on a centre line of the magnetic tape 3 considered in its widthwise direction. A tape lead step (not shown) having a lead angle $\alpha$ for regulating downward movement of the magnetic tape 3 is formed on the circumferential surface of the drum 1 in known manner. The magnetic tape 3 is driven on this tape lead step.

In a tape guide mechanism of the kind described above, the magnetic tape 3 can be stably driven by properly selecting, in accordance with a predetermined equation, the diameter and the inclination angle of the drum 1 with respect to the reference surface 2; the diameter and the inclination angle of the guide pins 5 and 6 with respect to the reference surface 2; the wrap angle of the magnetic tape 3 around the drum 1, *i.e.,* the angle from the point $b$ to the point $d$; a distance $1_1$ between the points $a$ and $b$; a distance $l_2$ between the points $d$ and $e$; and the lead angle $\alpha$ of the magnetic tape 3 at the point $c$ with respect to a single plane $f$ which includes the points $a, c$ and $e$.

Other important conditions for stably driving the magnetic tape 3 are that the heights at the points $a, c$ and $e$ from the reference surface 2 be equal to each other, and the plane $f$ be parallel to the reference surface 2.

In the above described tape guide mechanism, the distances $l_1$ and $l_2$ are equal to each other. Therefore, the guide roller 4, the guide pin 5, the guide roller 7, and the guide pin 6 can be symmetrically arranged with respect to the drum 1. This allows easy design and also allows the overall size of the apparatus to be small.

Although the above-described tape guide mechanism has various advantages as noted above, satisfactory regulation of widthwise movement of the magnetic tape 3 on the circumferential surface of the drum 1 cannot be obtained. For this reason, the magnetic tape 3 tends to float upward from the tape lead step on the circumferential surface of the drum 1.

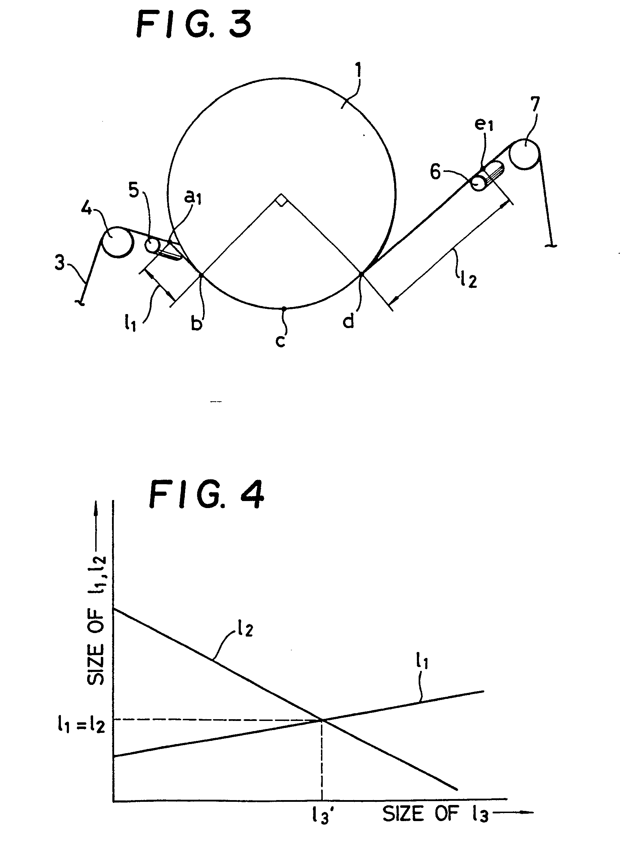

In accordance with a technique proposed to overcome this drawback, when the magnetic tape 3 enters from the entrance point $b$, it is allowed to enter inclined upward by an elevation angle $\theta_1$ as indicated by a dotted line in Figure 2. When the magnetic tape 3 passes through the exit point $d$, it is guided inclined upward at an elevation angle $\theta_2$ as also indicated by a dotted line. A force acts to urge the magnetic tape 3 toward the tape lead step so as to regulate the widthwise movement of the magnetic tape 3.

This technique is disclosed, for example, in Japanese Patent Disclosure No. 58/121170. With the condition that the plane $f$ is parallel to the reference surface 2, in order to incline the magnetic tape 3 at the angles $\theta_1$ and $\theta_2$ as indicated by the dotted lines in Figure 1, the guide points $a$ and $e$ must be shifted with respect to the drum 1 to the positions indicated by the dotted lines in Figure 1, that is to say the guide pin 5 must be moved closer to the drum 1 and the guide pin 6 must be moved away from the drum 1 to the positions indicated by the dotted lines. The angles $\theta_1$ and $\theta_2$ are normally small angles, *e.g.,* 1.0° to 1.5°. However, the corresponding moving distances of the guide pins 5 and 6 are relatively large. In this case, if the wrap angle of the magnetic tape 3 around the drum 1 is large, *e.g.,* 180° or more, no problem occurs. However, if the wrap angle is small *e.g.,* about 90°, the moving distance of the guide pin 6 is set to be several to several tens of times that of the distance which the guide pin 5 must be moved. Thus, when the point $a$ is moved on the plane $f$, if it is moved a small distance to the point $a_1$, the tape is inclined upward by the angle $\Theta_1$. However, when the point $e$ is moved on the plane $f$, the magnetic tape 3 is not inclined upward by the angle $\theta_2$ unless the point $e$ is moved a considerable distance to the point $e_1$.

As a result, as shown in Figures 2 and 3, the distance $l_2$ is required to be far larger than the distance $l_1$ (in the illustrated example, $l_2=4l_1$). Then, the arrangement of the guide roller 4 and the guide pin 5, and the guide roller 7 and the guide 6 becomes unsymmetrical with respect to the drum 1 causing difficulties in mechanism design and preventing the manufacture of a compact apparatus.

EP—A—83 932 and DE—A—3 338 710 both show apparatus which have this disadvantage and which in addition are "long wrap" apparatus, that is to say having an angle of wrap in the region of 180°.

According to the invention there is provided a tape guide mechanism for magnetic recording/ reproducing apparatus comprising a tape guide drum and first and second inclined guides, the tape guide drum being disposed such that its axis of rotation is inclined at an angle with respect to a reference surface, incorporating a rotary head, and having a lead portion for regulating a drive position of a magnetic tape on an outer surface thereof, the first and second inclined guides being arranged at two sides of the tape guide drum so as to wrap the magnetic tape around the outer surface of the tape guide drum at a predetermined wrap angle through which the magnetic tape is guided such that a central line thereof considered in a widthwise direction is guided through a wrap start entrance point to a wrap end exit point through a wrap central point, while being inclined at a predetermined angle with respect to the reference surface, characterised in that the wrap angle of the magnetic tape around the tape guide drum is approximatley 90° and the first and second inclined guides are disposed such that the magnetic tape enters the entrance point in a direction to form a predetermined elevation angle with respect to the lead portion and exits from the exit point in a direction to form a predetermined elevation angle through the wrap central point cn a state in which a plane including a first contact point between the first inclined guide and the central line of the magnetic tape along the widthwise direction and a second contact point between the second inclined guide and the central line of the magnetic tape along the widthwise direction is parallel to the reference surface; and the wrap central point of the tape guide drum is spaced by a first finite distance from the plane including the first and second contact points, which first distance is so selected as to determine a second distance between the first contact point and the entrance point and a third distance between the second contact point and the exit point.

Thus the inclined guide pins at the entrance and the exit of the drum can be disposed at position most preferable in terms of design with the magnetic tape entering the drum at an elevation angle $\theta_1$ and exiting at an elevation angle $\theta_2$.

The tape guide mechanism of the invention can regulate widthwise movement of the magnetic tape along the circumferential surface of the drum while allowing the guide pins at the drum entrance and exit to be arranged symmetically with respect to the drum.

The invention is diagrammatically illustrated by way of example in the accomanying drawings, in which:-

Figure 1 is a schematic side view showing an embodiment of a tape guide mechanism according to the invention and for explaining a conventional mechanism;

Figure 2 is a perspective view of the tape guide mechanism of Figure 1 wherein the tape is guided at an elevation angle;

Figure 3 is a schematic plan view of the mechanism shown in Figure 2;

Figure 4 is a graph showing the distance from the inclined guide pins at the entrance and the exit to the drum as a function of the moving distance of the tape wrap central position; and

Figure 5 is a schematic plan view showing an embodiment of the present invention.

Referring to Figure 1, the point $a$ is shifted to the point $a_1$ to incline the magnetic tape 3 upward at the elevation angle $\theta_1$, and the point $e$ shifted to the point $e_1$ to incline the magnetic tape 3 upward by the elevation angle $\theta_2$. In this case, if the point $c$ is moved downward by a distance $l_3$ while the points $a_1$ and $e_1$ are on the plane $f$, the distances $l_1$

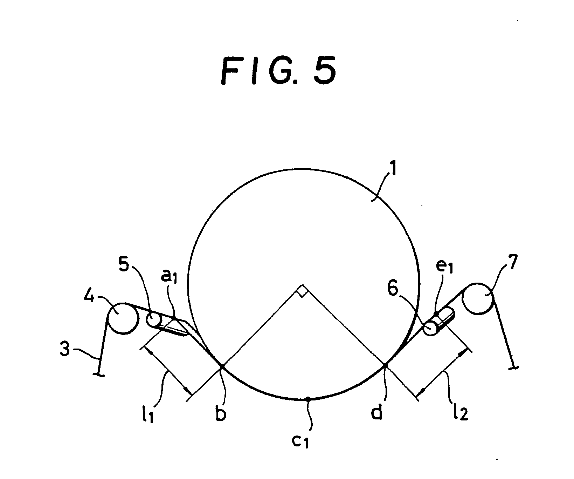

and $l_2$ change as shown in Figure 4. Therefore, when the distance $l_3$ satisfying the condition $l_1=l_2$ is calculated in accordance with Figure 4 and the point $c$ is shifted to the point $c_1$, the distance $l_1$ between the points $a_1$ and $b$ cn be set to be equal to the distance $l_2$ between the points $d$ and $e_1$, as shown in Figure 5.

With the above arrangement, the guide roller 4 and the guide pin 5, and the guide roller 7 and the guide pin 6 can be set to be symmetrical about the drum 1. Note that Figure 4 is a graph showing the characteristics for improving the relationship between the distances $l_1$ and $l_2$, i.e., the relation $l_2 \fallingdotseq l_1$. Referring to Figure 4, when $l_3=0$, $l_2 \fallingdotseq 4l_1$.

According to the above embodiment, $l_1=l_2$. However, in general, when the distance $l_3$ is selected, the distances $l_1$ and $l_2$ can be freely selected. Therefore, the guide rollers 4 and 7 and the guide pins 5 and 6 can be arranged at positions allowing easiest design.

**Claims**

1. A tape guide mechanism for magnetic recording/reproducing apparatus comprising a tape guide drum (1) and first (5) and second (6) inclined guides, the tape guide drum (1) being disposed such that its axis of rotation is inclined at an angle with respect to a reference surface (2), incorporating a rotary head, and having a lead portion for regulating a drive position of a magnetic tape (3) on an outer surface thereof, the first (5) and second (6) inclined guides being arranged at two sides of the tape guide drum (1) so as to wrap the magnetic tape (3) around the outer surface of the tape guide drum (1) at a predetermined wrap angle through which the magnetic tape is guided such that a central line thereof considered in a widthwise direction is guided through a wrap start entrance point ($b$) to a wrap end exit point ($d$) through a wrap central point ($c$), while being inclined at a predetermined angle with respect to the reference surface (2), characerised in that the wrap angle of the magntic tape (3) around the tape guide drum (1) is approximately 90° and the first (5) and second (6) inclined guides are disposed such that the magnetic tape (3) enters the entrance point ($b$) in a direction to form a predetermined elevation angle ($\theta_1$) with respect to the lead portion and exits from the exit point ($d$) in a direction to form a predetermined elevation angle ($\theta_2$) through the wrap central point ($c_1$) in a state in which a plane (f) including a first contact point ($a_1$) between the first inclined guide (5) and the central line of the magnetic tape (3) along the widthwise direction and a second contact point ($e_1$) between the second inclined guide (6) and the central line of the magnetic tape (3) along the widthwise direction is parallel to the reference surface (2); and the wrap central point ($c_1$) of the tape guide drum (1) is spaced by a first finite distance ($l_3$) from the plane (f) including the first ($b$) and second ($d$) contact points, which first distance ($l_3$) is so selected as to determine a second distance ($l_1$, Fig. 5) between the first

contact point ($a_1$) and the entrance point ($b$) and a third distance ($l_2$, Fig. 5) between the second contact point ($e_1$) and the exit point ($d$).

2. A tape guide mechanism according to claim 1, wherein the first distance ($l_3$) is selected such that the second ($l_1$, Fig. 5) and third ($l_2$, Fig. 5) distances are substantially equal to each other.

## Patentansprüche

1. Bandführungsmechansimus für ein magnetisches Aufzeichnungsgerät, mit einer Bandführrungstrommel (1) und einer ersten (5) und einer zweiten (6) geneigten Führung, wobei die Bandführungstrommel (1), deren Achse relativ zu einer Referenzfläche (2) schiefwinklig geneigt ist, einen rotierenden Kopf besitzt und auf ihrer Außenfläche einen Leitabschnitt zur Regulierung der Antriebsposition eines Magnetbandes (3) aufweist, wobei die erste (5) und die zweite (6) geneigt Führung an zwei Seiten der Bandführrungstrommel so angeordnet sind, daß sie das Magnetband (3) mit einem vorbestimmten Umschlingungswinkel um die Außenfläche der Bandführungstrommel (2) herumführen, wobei das Magnetband (3) derart durch diesem Umschlingungswinkel hindurchgeführt wird, daß seine Längsmittellinie von einem an Anfang der Umschlingung liegenden Eintrittspunkt (b) über einen zentralen Umschlingungspunkt (c) zu einem am Ende der Umschlingung liegenden Austrittspunkt (b) verläuft, während es gegenüber der Referenzfläche (2) mit einem vorbestimmten Winkel geneigt ist, dadurch gekennzeichnet, daß der Umschlingungswinkel des Magnetbandes (3) um die Bandführungstrommel (1) etwa 90° beträgt und die erste (5) und die zweite (6) geneigte Führung so angeordnet sind, daß das Magnetband (3) in einer solchen Richtung in den Eintrittspunkt (a) eintritt, daß es mit dem genannten Leitabschnitt einen vorbestimmten Elevationswinkel ($\theta_1$) bildet, und in einer solchen Richtung aus dem Austrittspunkt (b) austritt, daß es mit dem genannten Leitabaschnitt einen vorbestimmten Elevationswinkel ($\theta_2$) bildet, und den zentralen Umschlingungspunkt (c) in einem Zustand durchläuft, in dem eine Ebene (f), die den ersten Berührungspunkt ($a_1$) zwischen der ersten Führrung (5) und der Längsmittellinie des Magnetbands (3) und den zweiten Berührungspunkt ($e_1$) zwischen der zweiten Führung (6) und der Längsmittellinie des Magnetbands (3) enthält, zu der Referenzfläche (2) parallel ist, und daß der zentrale Umschlingungspunkt (c) der Bandfürhrungstrommel (1) von der den ersten (b) und den zweiten (d) Berührungspunkt enthaltenden Ebene einen ersten endlichen Abstand ($1_3$) hat, der so gewählt ist, daß er einen zweiten Abstand ($l_1$, Fig. 5) zwischen dem ersten Berührungspunkt ($a_1$) und dem Eintrittspunkt (b) und einen dritten Abstand ($l_2$, Fig. 5) zwischen dem zweiten Berührungspunkt ($e_1$) und dem Austrittspunkt (d) bestimmt.

2. Bandführungsmechanismus nach Anspruch 1, bei dem der erste Abstand ($l_3$) so gewählt ist, daß der zweite ($l_1$, Fig. 5) und der dritte ($l_2$, Fig. 5) Abstand einander gleich sind.

## Revendications

1. Mécanisme de guidage de bande pour appareil magnétique d'enregistrement/reproduction, comportant un tambour (1) de guidage de bande et un premier (5) et un second (6) guides inclinés, le tambour (1) de guidage de bande étant disposé de façon que son axe de rotation soit incliné d'un certain angle par rapport à une surface de référence (2), incorporant une tête tournante, et présentant une portion de guidage pour réguler une position d'entrainement d'une bande magnétique (3) sur sa surface extérieure, le premier (5) et le second (6) guides inclinés étant disposés des deux côtés du tambour (1) de guidage de la bande, de façon à ce que la bande magnétique (3) s'enroule autour de la surface extérieure du tambour (1) de guidage de la bande sous un angle d'enroulement prédéterminé par lequel la bande magnétique est guidé de façon que sa ligne axiale, considérée dans le sens de la largeur, soit guidée depuis un point d'entrée (b) au début de l'enroulement jusqu'à un point de sortie (d) à la fin de l'enroulement en passant par un point central d'enroulement (c), tout en étant inclinée sous un angle prédéterminé par rapport à la surface de référence (2), caractérisé par le fait que l'angle d'enroulement de la bande magnétique (3) autour du tambour (1) de guidage de la bande est d'environ 90° et que le premier (5) et le second (6) guides inclinés sont disposés de façon que la bande magnétique (3) arrive au point d'entrée (b) selon une direction qui forme un angle d'élévation prédéterminé ($\theta_1$) par rapport à la portion de guidage et sorte au point de sortie (d) selon une direction qui forme un angle d'élévation prédéterminé ($\theta_2$), en passant par le point central d'enroulement ($c_1$), dans un état dans lequel un plan (f) passant par un premier point de contact ($a_1$), entre le premier guide incliné (5) et la ligne axiale de la bande magnétique (3), dans le sens de sa largeur, et par un second point de contact ($e_1$), entre le second guide incliné (6) et la ligne axiale de la bande magnétique (3), dans le sens de sa largeur, est parallèle à la surface de référence (2); et par le fait que le point central d'enroulement ($c_1$) du tambour (1) de guidage de la bande est espacé, d'une première distance finie ($l_3$), d'avec le plan (f) passant par le premier (b) et le second (d) points de contact, première distance ($l_3$) qui est choisie de façon à déterminer une seconde distance ($l_1$, Figure 5) entre le premier point de contact ($a_1$) et le point d'entrée (b) et une troisième distance ($l_2$, Figure 5) entre le second point de contact ($e_1$) et le point de sortie (d).

2. Mécahisme de guidage de bande selon la revendication 1, dans lequel on choisit la première distance ($l_3$) de façon que la seconde ($l_1$, Figure 5) et la troisième ($l_2$, Figure 5) distances soient sensiblement égales l'une à l'autre.

# FIG. 1

# FIG. 2

1

# FIG. 3

# FIG. 4

# FIG. 5